Europäisches Patentamt

European Patent Office

Office européen des brevets

(19)

(11) Publication number: **0 065 040**
**A1**

## (12) EUROPEAN PATENT APPLICATION

(21) Application number: **81302129.2**

(22) Date of filing: **13.05.81**

(51) Int. Cl.³: **B 60 K 37/02, B 60 K 37/04**

(43) Date of publication of application: **24.11.82**
**Bulletin 82/47**

(84) Designated Contracting States: **AT BE CH DE FR GB IT LI LU NL SE**

(71) Applicant: **DEERE & COMPANY, 1 John Deere Road, Moline Illinois 61265 (US)**

(72) Inventor: **Hauk, Klaus, Berlinerstrasse 28, D-6701 Altrip (DE)**
Inventor: **Schutze, Michael, Niederfeldstrasse 40, D-6800 Mannheim (DE)**

(74) Representative: **Pears, David Ashley et al, REDDIE & GROSE 16 Theobalds Road, London WC1X 8PL (GB)**

(54) **Instrument panel for a vehicle.**

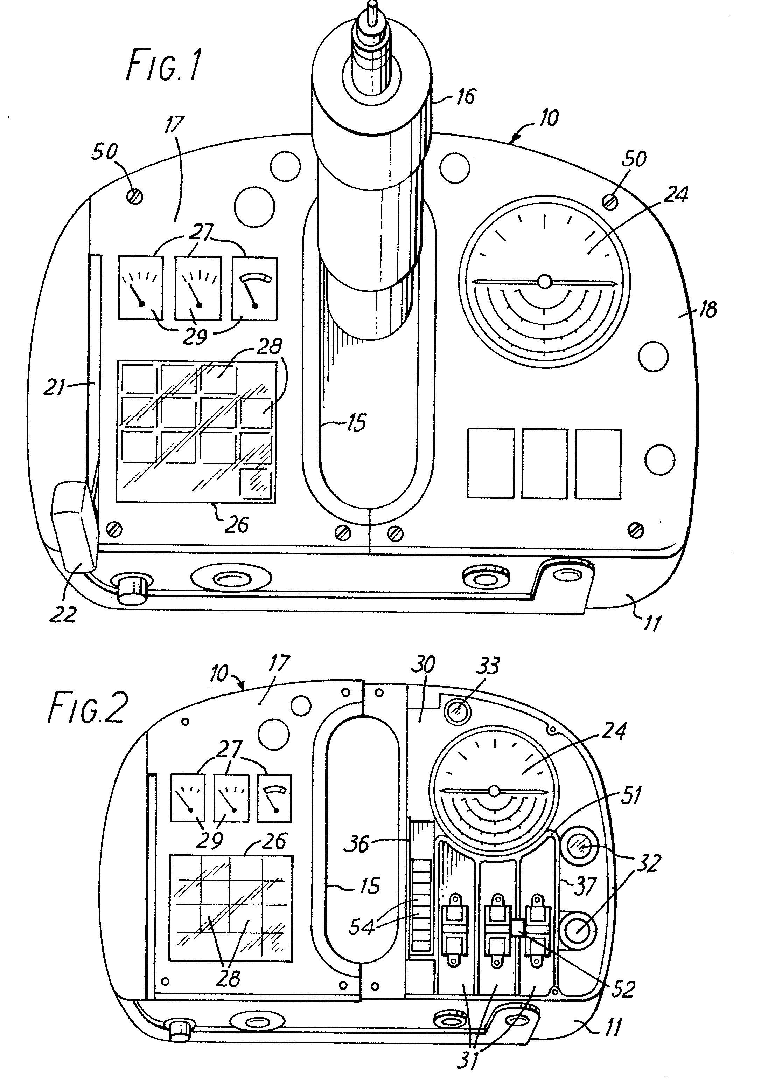

(57) The panel (10) has a central slot (15) for a vertically adjustable steering column. On the right of this slot is a plug in moudle which is normally convered by a cover plate (not shown in Fig. 2). The module incorporates a speedometer instrument (24), switches (31, 32) and a plug in circuit board (36) which establishes the pattern of connections appropriate to any given vehicle model and also incorporates fuzes for the electrical circuits. With the cover plate removed, the module can be withdrawn from the front for testing and servicing. All connections are made via one or more multi-pin connectors at the back. Another plug in module on the left under a cover plate (17) carries an array of warning lamps (28) and various gauges (29). This module and its cover plate are removable as one unit to allow replacement of blown bulbs from the rear of the module.

-1-

## INSTRUMENT PANEL FOR A VEHICLE

The present invention relates to an instrument panel for a vehicle, comprising a plurality of electrical components and connections from the components to the vehicle wiring system. The invention is applicable to the instrument panels of automobiles, lorries and other commercial vehicles including tractors, for example. The term "electrical components" is used to cover all components (including those more specifically referred to as electronic components) as may be fitted in or on an instrument panel. These typically include accessible or visible components such as switches, gauges and warning or panel lighting lamps and also hidden components such as relays, a flasher unit, a warning buzzer and so on.

In the conventional construction of vehicle instrument panels, the electrical components are individually mounted in the panel and the corresponding wires of the vehicle wiring harness are brought to the instruments and terminated in electrical connectors which push on to terminal tongues of the components. Access to the components is difficult and commonly requires the whole panel itself to be detached and withdrawn to obtain access from the rear. Alternatively access is from under the dashboard in a confined space and even the simple operation of changing a blown bulb can be awkward and time consuming. Access is further impeded by the "birds nest" of wiring and, in spite of colour coding, it is all too easy to make incorrect connections or fail to make one of the many individual connections involved. This makes fault finding difficult and, in general, the maintenance of known instruments panels is disproportionately time consuming and expensive.

The object of the present invention is accordingly to provide an improved vehicle instrument panel which overcomes these problems.

According to the present invention there is provided a vehicle instrument panel, comprising a plurality of electrical components and connections from the components to the vehicle wiring system, characterised in that a plurality of components are mounted in a unitary module which is detachably mounted in the panel so as to be removable from the front and connected into the vehicle wiring by a multi-pin connector.

In order to provide a good appearance, the module can be provided with a cover plate, having apertures for the accessible or visible components. If the module has components requiring routine servicing from the front, the cover plate can be separately detachable so that the module is removable for servicing from the front after removing the detachable cover plate. If routine servicing from the front of the module is not required, the cover plate can be fixed to the module so that the module and cover plate are removable from the front as one unit for servicing.

Although screws or other fixing devices may be utilised for retaining the module and the cover plate, it is preferred that at least the module shall be retained simply by snap in connectors, so that access is obtained simply by removing the cover plate, if this is separately detachable, e.g. prising it off, and then pulling out the module thereby exposed. The main retaining force for the module may in fact be provided by the multi-pin connector which can be constructed like a printed circuit edge connector as one example. If necessary more than one connector can be used to handle the required number of connections. In any event, the use of a polarized connector or connectors will ensure that the correct connections are all made without any risk of error on the part of the servicing engineer. If a fault developes, the module can be replaced by a good module. If this clears the fault, the fault must be in the old module which can either be tested and serviced on the bench or discharded, as appropriate. If replacement of the module fails to cure the fault, the engineer will know that he has to look into the vehicle electrical system outside the module.

One of the components is the module can be a plug-in circuit board which is utilised to establish the desired pattern of connections for a particular vehicle model. Automobiles, tractors and other vehicles are customarily marketed in a variety of models adapted to different ranges of user facilities, different geographical markets, different types of lighting system and so on. The use of a plug-in circuit board which can be selected for each different module makes it possible to establish the required pattern of connections in a simple and inexpensive way. Moreover, this circuit board can incorporate the fuze elements for the electrical circuits. The plug-in circuit board is preferably plugged into an edge connector on a main circuit board at the back of the module so that the front edge of the plug-in board is accessible under the cover plate for easy replacement (without withdrawing the whole module) when a fuze has blown or a different pattern of connections is required.

In order further to adapt the panel to use with different sets of electrical components, the cover plate is preferably formed with break-out apertures at all positions where switches, lights, gauges etc may be located. Only those apertures are then braoken out which are required to accommodate the components actually included in any given module. It can be seen therefore that the invention provides great flexibility in tailoring the elements of the instrument panel to a wide variety of vehicle models, without the expense of alternative tooling, multiple stock items and so on.

The module can include hidden components such as a flasher unit, buzzer or relays which are relatively sensitive and require protection from dirt and moisture in tractors and other vehicles subjected to an adverse environment. Such protection can be provided by a sheet of plastics material covering the module under the cover plate. This sheet of plastics material can be clear and additionally serve the purpose of distributing light to a plurality of visible components from a single panel lighting bulb.

Obviously it is not necessary to mount all of the components in a single module. More than one module can be employed and, in particular, an advantageous arrangement in a vehicle with a vertically adjustable steering column utilises two modules and corresponding cover plates, one on the left of the steering column, and one on the right. Gauges and warning lights can then be grouped in one module while a speedometer instrument and switches can be grouped in the other module.

The invention will be described in more detail, by way of example, with reference to the accompanying drawings, in which:

Figure 1 is a general front view of a tractor instrument panel embodying the invention,

-4-

Figure 2 is a view of the partially disassembled panel, minus the right hand cover plate,

Figure 3 is a view of the main housing or frame of the panel and the two cover plates,

Figure 4 is a fragmentary view of the right hand module with its circuit board unplugged, and

Figure 5 is a view of the underside of the left hand module.

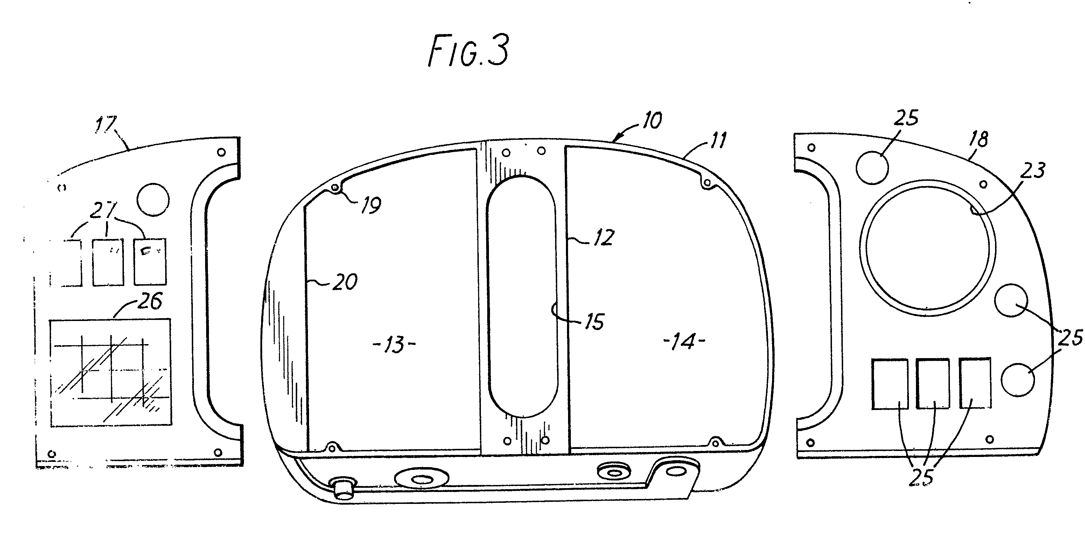

With reference to Figs 1, 2 and 3 the main housing or frame 10 of the panel comprises a moulded peripheral wall 11 spanned by a central bridge piece 12 separating a left hand module recess 13 from a right hand module recess 14. The bridge piece 12 has a vertical slot 15 which accommodates the vertically adjustable steering column 16 of the tractor. At the left of the left hand recess 13 there is a flange which forms one edge of a slot 21 for a selector lever 22.

Each recess is covered by a corresponding cover plate 17, 18 moulded from the same tough plastics material as the housing 10. In the illustrated embodiment the cover plates are retained by screws 50 through holes iunto the ends of internal ribs 19 of the housing but snap in fixing of the cover plates may be provided for further simplification and ease of access.

The right hand cover plate 18 is separately detachable and provided with a circular aperture 23 for a speedometer instrument 24 which, in this embodiment, is a tractor meter showing also speeds in the range of gears of the vehicle. A plurality of other apertures 25 are provided for various switches and warning lamps and other such apertures are provided in the wall of the housing itself as well as the left cover plate. At least some of these apertures are initially provided with break-out portions of the respective parts so that, where an aperture is needed, it is broken out whereas, where no aperture is needed (because the corresponding component is not provided) it is not broken out and there are therefore no unsightly, unused holes for dirt to get into the panel.

The left hand cover plate 17 additionally has a large rectangular aperture 26 and three smaller rectangular apertures 27 glazed with clear plastics windows and provided for viewing an array of warning lights 28 and three gauges 29 respectively.

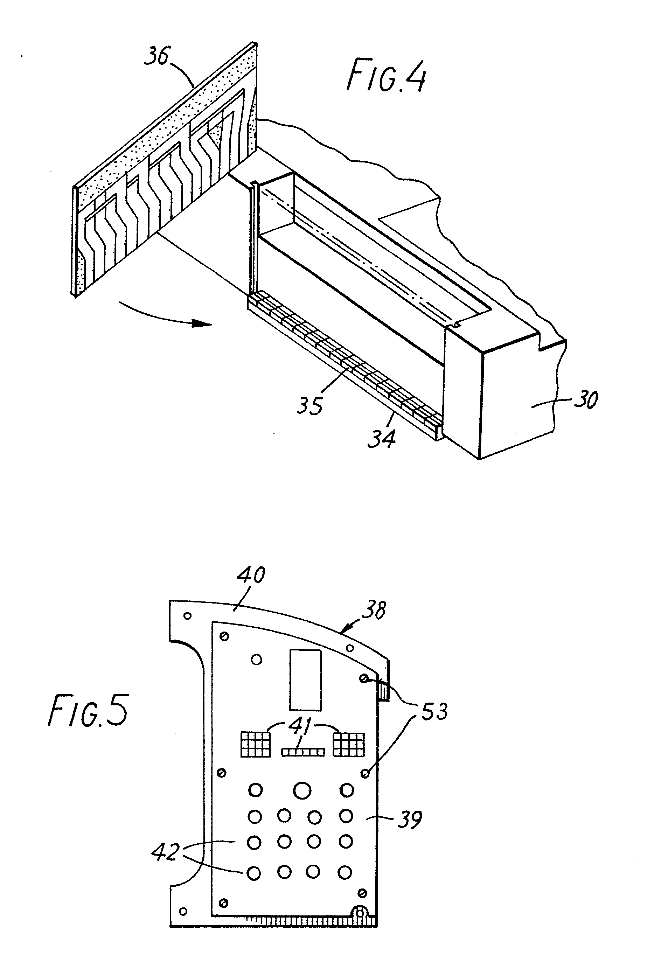

The right hand module can be seen in Fig 2 and comprises a moulded plastics block 30 with recesses and fixing holes for the tractor meter 24 and components illustrated as rocker siwtches 31, push button switches 32 and a right turn indicator warning light 33. On the back of the block is fitted a main circuit board 34 (Fig 4) and additionally has on its underside (not shown) one or two multi-pin electrical connectors. The mating connector part of parts are attached to wires in the vehicle with some slack so that, when the module is withdrawn the mating connector part(s) come with it far enough to be accessible for pulling off the module connector(s). Before the module is pushed into the right hand module recess 14, as illustrated in fig 2, the electrical connections are made by reconnecting the mating connector part(s).

Along the left hand edge of the main printed circuit board 34 is an edge connector 35 which receives the rear edge of a vertically mounted plug-in circuit board 36 which serves two functions. In the first place it establishes a pattern of connections between conductors on the main circuit board and this pattern is chosen, by selecting the plug-in board accordingly, to suit the requirements of the particular vehicle model being provided with the instrument panel. In the second place, the plug-in circuit baord incorporates fuze elements for the electrical circuits. If a fuze blows, the plug in board can be pulled out after removing just the right hand cover plate 18 for fuze replacement. The fuzes can be tracks on the plug-in board, which is replaced as a whole if a fuze blows (Fig 4) or individually replaceable cartridge fuzes in holders 54 (Fig 1).

Inside the main moulded block 30 of the right hand module there are mounted a buzzer and possibly one or more relays. In order to provide protection for these internal components, the block is partly covered by a sheet 37 of plastics material which is also apertures to accommodate the switches 31. The sheet is stiffened by ribs 51 round its periphery and between the switches. The plastics material is clear or transluscent and additionally serve to distribute light from a single panel bulb 52 to the switches.

The underside of the left hand module 38 is illustrated in Fig 5 and essentially comprises a printed circuit board 39 mounted under a plate 40 which carries the meter movements. This module normally remains attached to the cover plate 17 by screws 53 because routine servicing of this module at the front is not normally required. On the underside of the circuit board 39 there are three multi-pin electrical connectors 41 which connect the module into the vehicle wiring system by way of making connector parts on the vehicle wiring. The circuit board carries an array of holders 42 for warning lamps and, if a bulb blows, it can easily be replaced after removing the screws 50 (Fig 1) holding left hand cover plate and pulling out the cover plate and module as one unit. The bulbs are replaceable from the rear of the module. The meter movements mounted on the left hand circuit board are the gauges such as fuel gauge, temperature gauge and oil pressure gauge, which do not normally require attention but to which access can be gained if need be by withdrawing the module and its cover plate and then taking off the cover plate.

CLAIMS

1.     A vehicle instrument panel comprising a plurality of electrical components and connections from the components to the vehicle wiring system, characterised in that a plurality of components are mounted in a unitary module which is detachably mounted in the panel (10) so as to be removable from the front and connected into the vehicle wiring by a multi-pin connector (41).

2.     A vehicle instrument panel according to claim 1, characterised by a detachable cover plate (18) having apertures (26, 27) for the accessible or visible components, and in that the module is removable for servicing after removing the detachable cover plate (18).

3.     A vehicle instrument panel according to claim 1, characterised by a cover plate (17) attached to module (38) and in that the module and plate are removable as one unit.

4.     A vehicle instrument panel according to claim 1, 2 or 3, characterised in that at least one of the moudle (38) and cover plate (17, 18) are retained by snap in connectors.

5.     A vehicle instrument panel according to any of claims 1 to 4, characterised by an interchangeable circuit board (36) plugged into the module by establishing a particular pattern of electrical connections in the module.

6.     A vehicle instrument panel according to claim 5, characterised in that the plug-in circuit board (36) incorporates fuzes for the electrical circuits.

7.     A vehicle instrument panel according to any of claims 1 to 6, characterised in that the cover plate (17, 18) is formed with a plurality of break out apertures (25) for selective provision of only the apertures required for a given module.

0065040

8.      A vehicle instrument panel according to any of claims 1 to 7, characterised by a sheet of clear plastics material (37) on the module under the cover plate (18) and serving both to protect hidden components in the module and to distribute light from a panel lighting bulb (52) to a plurality of accessible components (31).

9.      A vehicle instrument panel according to any of claims 1 to 8, characterised by two modules and corresponding cover plates (17, 18) one to the left and one to the right of a slot (15) accommodating a vertically adjustable steering column (16).

10.      A vehicle instrument panel according to claim 9, characterised in that one module (38) includes a plurality of gauges (29) and warning lights (28) while the other module incorporates a speedometer instrument (24) and a plurality of switches (31, 32).

0065040

1.      A vehicle instrument panel comprising a plurality of electrical components in a detachable unitary module and a multi-pin connector connecting the module into the vehicle wiring, characterised in that the module is completely detachable by withdrawal from the front of the panel (10), with disconnection of the connector (41) without the need for access to the rear of the panel, either automatically on withdrawing the module from the panel or after the module has been withdrawn from the panel, whereby the module is removable from the vehicle for bench testing.

2.      A vehicle instrument panel according to claim 1, characterised by a detachable cover plate (18) having apertures (26,27) for the accessible or visible components, and in that the module is removable from the front for servicing after removing the detachable cover plate (18).

3.   :   A vehicle instrument panel according to claim 1, characterised by a cover plate (17) attached to module (38) and in that the module and plate are removable from the front as one unit.

4.      A vehicle instrument panel according to claim 1, 2 or 3, characterised in that at least one of the modules (38) and cover plate (17,18) are retained by snap in connectors.

5.      A vehicle instrument panel according to any of claims 1 to 4, characterised by an interchangeable circuit board (36) plugged into the module for establishing a particular pattern of electrical connections in the module and which can be changed from the front after withdrawing the module.

6.      A vehicle instrument panel according to claim 5, characterised in that the plug-in circuit board (36) incorporates fuzes for the electrical circuits.

7.      A vehicle instrument panel according to any of claims 2 to 6, characterised in that the cover plate (17,18) is formed with a plurality of break out apertures (25) for selective provision of only the apertures required for a given module.

FIG.1

FIG.2

FIG.3

36

FIG.4

35

34

30

40

38

FIG.5

41

53

42

39

European Patent
Office

**EUROPEAN SEARCH REPORT**

0065040

Application number

EP 81 30 2129

## DOCUMENTS CONSIDERED TO BE RELEVANT

| Category | Citation of document with indication, where appropriate, of relevant passages | Relevant to claim |
|---|---|---|
| X | DE - A - 2 329 676 (SWF)<br>* Figures 1-3; page 3, lines 1-30; page 4 * | 1,2 |
| X | DE - A - 2 260 124 (CLARK EQUIP-MENT)<br>* Figures 1-5; page 3, lines 33, 34; pages 4-8 * | 1,5 |
| A | FR - A - 2 020 777 (JOSEPH LUCAS)<br>* Figures 1-8; pages 2-4 * | 1 |

**CLASSIFICATION OF THE APPLICATION (Int. Cl. 3)**

B 60 K 37/02
           37/04

**TECHNICAL FIELDS SEARCHED (Int.Cl. 3)**

B 60 K

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 12-01-1982 | VANNESTE |

EPO Form 1503.1   06.78